Europäisches Patentamt

European Patent Office

Office européen des brevets

(19)

(11) Publication number: **0 150 518**
**B1**

(12) **EUROPEAN PATENT SPECIFICATION**

(45) Date of publication of patent specification: 04.05.88

(21) Application number: **84200120.8**

(22) Date of filing: **30.01.84**

(51) Int. Cl.⁴: **B 23 B 51/08,** B 21 D 31/02, B 21 C 37/29

(54) Flowdrill, particularly adapted to be used in a hand drilling machine.

(43) Date of publication of application:
07.08.85 Bulletin 85/32

(45) Publication of the grant of the patent:
04.05.88 Bulletin 88/18

(84) Designated Contracting States:
AT BE CH DE FR GB IT LI LU NL SE

(56) References cited:
EP-A-0 057 039
AU-A- 29 659
FR-A-1 189 384
GB-A-2 091 610
NL-C- 160 499
US-A-2 991 551
US-A-3 094 137
US-A-3 559 445
US-A-4 132 097

(73) Proprietor: **Flowdrill B.V.**
**Savannahweg 70 Industrieterrein Lage Weide**
**NL-3542 AW Utrecht (NL)**

(72) Inventor: **Dekkers, Gerard Johan**
**Utrechtseweg 48 b**
**NL-3704 HE Zeist (NL)**

(74) Representative: **den Boer, Jan Johannes, Ir.**
**et al**
**Octrooibureau Polak & Charlouis Laan Copes**
**van Cattenburch 80**
**NL-2585 GD The Hague (NL)**

Courier Press, Leamington Spa, England.

## Description

The invention relates to a flowdrill having a shaft with a mainly conical operative flowdrilling end portion.

Such flowdrills are known, e.g. from the French Patent 1.189.384, the Dutch Patent 160.499 and the European Patent 0057039. They operate satisfactorily in larger stationary drilling machines, in which they may be brought into engagement with a workpiece by a sufficient axial force, so that so much heat is generated due to the friction with the usually sheetlike workpiece, that a beginning of the hole to be drilled is formed.

The use of a flowdrill in a hand held drilling machine is practically impossible since then the user would have to produce himself the axial feed force.

It has now appeared through experiments that this disadvantage may be overcome if for this purpose a special flowdrill is used, namely a flowdrill in which, according to the invention, one or more recesses have been formed in the operative flowdrilling end portion along part of the length of the conical portion adjacent to the tip thereof, said recesses having sharp edges which function as cutting edges.

Thereby a beginning of the hole is generated by the cutting edges and this quickly and without a high axial feed force. The hole is widened by the combined action of the cutting edges and the smooth 'flowdrill'-portions. Thereafter, the drill moves downwardly into the hole to such a distance that the cutting edges have passed the hole so that the drill furthermore operates like a conventional flowdrill.

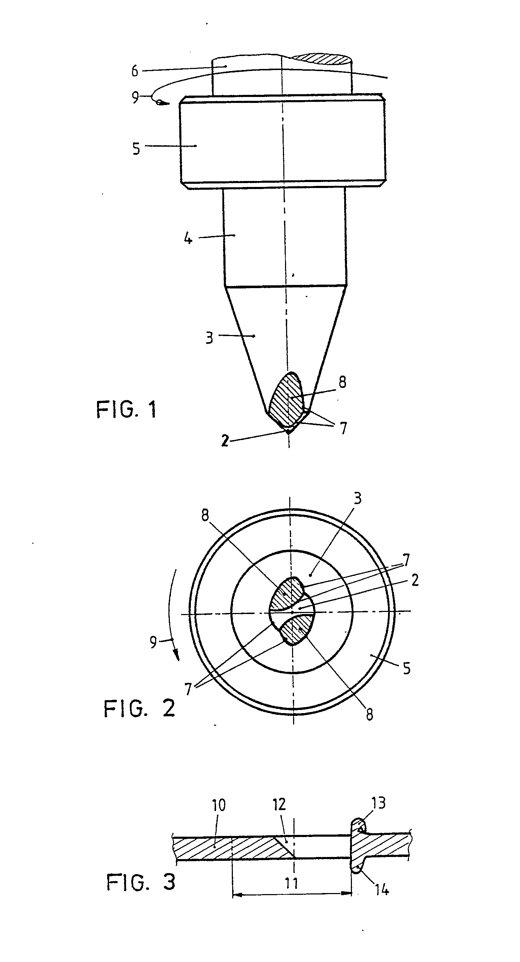

From GB—A—2.091.610 a flow drill is known which according to Figure 1 thereof has flat portions in an otherwise conical shaft surface. However, the transitions between the conical end portions are no cutting edges. According to Figure 5 of this publication the conical flowdrill end is preceded at the tip by a conventional twist drill portion for starting the hole. However, when the tapered flowdrill portion advances into this hole the usual high axial force for flowdrilling has to be exerted. The same applies to the flowdrill according to US—A—4.132.097.

The drill according to the invention likewise may be used with advantage in a stationary drilling machine, in which the obtainable feed force is not sufficient to quickly produce a hole by means of a conventional flowdrill.

In most cases with the drill according to the invention the axial length of the shaft portion having the cutting edges will have a length equal to about 1/3 of the hole diameter to be provided. For it is, if this length is too small, there is no sufficient space for leading away the chip which is formed during cutting, whereas if the length of the cutting edge or edges is too large, too much material is cut away, so that the sleeve, which is formed, as will be further described below, becomes too thin.

The invention will be further explained below with reference to the drawing, showing as an example an embodiment of the flowdrill according to the invention.

Figure 1 shows a side view of the flowdrill.

Figure 2 is a view from below of said drill.

Figure 3 shows a cross-section of a hole, made by the flowdrill according to Figures 1 and 2, namely the left part of the figure after the passage of the drilltip and the right part of the figure after the passage of the complete drill.

The flowdrill 1 as shown in Figure 1 has a so called center tip 2 which merges with a tapering drill portion 3 which in turn merges with a cylindrical shaft portion 4.

Above said cylindrical shaft portion a collar 5 is provided which is followed by a shaft portion 6, which is adapted to clamp the drill in the drilling head of a drilling machine.

It appears from Figure 1 in combination with Figure 2, that adjacent the lower end of the drill, cutting edges 7, in this case two cutting edges, have been formed. In the embodiment shown, said cutting edges have been formed by providing two recesses 8 in the relative drill portion, e.g. by grinding, whereby the sharp cutting edges 8 are generated. Said cutting edges 7 are effective if the drill rotates according to the arrows 9 as shown in the drawing.

Figure 3 shows a cross-section of a piece of sheet material 10 in which a hole, having a diameter 11, may be provided by using the drill, the hole diameter corresponding to the diameter of the drill shaft portion 4. When the drill starts operating first the portion 12, to the left in Figure 3, is cut away by the cutting edges 7, whereafter the smooth flowdrill portion 3 enters in action and finally the hole is obtained, as shown to the right in Figure 3, having an upset collar 13 at the upper end and an extruded sleeve shaped projection 14 at the lower side of the hole. This upset material at both sides of the sheet provides additional material for the provision of screw thread whereby the sheet may be secured to other parts by means of bolts or screws.

It will be clear that the cutting edges in the lower shaft portion of the drill may be formed within the scope of the claims in a manner which differs from that which has been described above.

As said preferably the axial length of the portion having the cutting edges 7 is substantially equal to 1/3 of the diameter of the holes to be made and therefore of the diameter of the shaft portion 4.

## Claims

1. A flowdrill having a shaft with a mainly conical operative flowdrilling end portion, characterized in that one or more recesses (8) have been formed in the operative flowdrilling end portion (2, 3) along part of the length of the conical portion adjacent to the tip thereof, said recesses (8) having sharp edges (7) which function as cutting edges.

2. Flowdrill according to Claim 1, characterized in that the axial length of the shaft portion having the cutting edges (7) has a length which is equal to substantially 1/3 of the hole diameter (11) to be provided.

## Patentansprüche

1. Ein Flieszbohrer mit einem Schaft mit einem hauptsächlich kegeligen wirksamen flieszbohrenden Endteil, dadurch gekennzeichnet, dass eine oder mehrere Vertiefungen (8) im wirksamen flieszbohrenden Endteil (2, 3) über einen Teil der Länge des kegeligen Teils in der Nähe dessen Spitze geformt sind, welche Vertiefungen (8) scharfe Kanten (7) aufweisen, welche als Schneidkanten wirken.

2. Flieszbohrer gemäss Anspruch 1, dadurch gekennzeichnet, dass die axiale Länge des Schaftteils, welcher die Schneidkanten (7) aufweist, eine Länge hat, welche annäherend dem 1/3 Teil des zu bohrenden Lochdurchmessers (11) entspricht.

## Revendications

1. Un foret ramollissant, étant prévu d'un tige avec partie terminale opérative forant en ramollissant étant substantiellement conique, caractérisé en ce qu'un ou plusieurs creusages (8) ont été formés dans la partie terminale (2, 3) opérative forant en ramollissant, sur une partie de la longueur de la partie conique près de la pointe de ladite partie, lesdits creusages (8) ayant des arêtes aigues (7) fonctionnant comme des arêtes tranchantes.

2. Foret ramollissant, selon la revendication 1, caractérisé en ce que la longueur axiale de la partie de la tige ayant les arêtes tranchantes (7) a une longueur égale à substantiellement 1/3 partie du diamètre (11) du trou à forer.

0 150 518

FIG. 1

FIG. 2

FIG. 3

1